# EUROPEAN PATENT APPLICATION

(11) **EP 4 231 470 A1**
(43) Date of publication of application: **23.08.2023**
(21) Application number: 23152361.4
(22) Date of filing: 19.01.2023
(51) Int. Cl.: H02G 1/10, H02G 3/04, H02G 9/02, H02G 9/12

(54) **SUBMARINE CABLE PROTECTION APPARATUS AND LAYING METHOD THEREOF AND LAYING DEVICE**

(30) Priority: 21.02.2022 CN 202210154316
(71) Applicant: China Three Gorges Corporation, Wuhan, Hubei 430010 (CN)
(72) Inventor: DAI, Jialin, WUHAN, Hubei, 430010 (CN); ZHANG, Wei, WUHAN, Hubei, 430010 (CN); LUO, Lunbo, WUHAN, Hubei, 430010 (CN); LI, Zhou, WUHAN, Hubei, 430010 (CN); YU, Guangming, WUHAN, Hubei, 430010 (CN)
(74) Representative: Lavoix

(57) **Abstract**

The present invention provides a submarine cable protection apparatus and a laying method thereof and a laying device. The submarine cable protection apparatus includes: a flexible protection sleeve; a strapping fixing structure, disposed at a first end of the flexible protection sleeve; a first connector structure, disposed at a second end of the flexible protection sleeve, the first connector structure being configured to be connected to the laying device; and an accommodating bag, disposed on an inner side of the flexible protection sleeve and located at the second end of the flexible protection sleeve, a coagulator being disposed in the accommodating bag. After the foregoing submarine cable protection apparatus has been installed, the flexible protection sleeve may cover a dynamic submarine cable for protection. When a large number of marine life attachments exist outside the flexible protection sleeve after use for a period of time, it is only necessary to loose the strapping fixing structure to allow the flexible protection sleeve to fall off and replace a new flexible protection sleeve. Therefore, the technical solution of the present invention resolves the deficiency in the prior art that dynamic submarine cables are prone to the growth of marine life attachments, which are difficult to clean.

## Description

### TECHNICAL FIELD

The present invention relates to the field of underwater fixture technologies, and specifically to a submarine cable protection apparatus and a laying method thereof and a laying device.

### BACKGROUND

With China's "carbon peak" and "carbon neutrality" goals, coastal areas have put forward their own offshore wind power construction plans. To fully develop offshore wind power resources, deep-sea floating wind power technology is the key development direction. However, there are still many technical problems to overcome in offshore floating wind power technology. One of the problems is the attachment and growth of marine life on dynamic submarine cables, resulting in increased self-weight and line shape changes of the submarine cables and affecting the safety of submarine cables in service. At present, there is relatively little research on the problem of growth of attached life on dynamic submarine cables. A regular cleaning method is generally used for the problem of growth of attached life on oil and gas platforms, ships, and other structures. However, such a cleaning method cannot prevent the attachment and growth of marine life, and it is difficult to apply corresponding methods to the prevention and cleaning of attached life on flexible dynamic submarine cables.

### SUMMARY

Therefore, a technical problem to be resolved by the present invention is to overcome the deficiency in the prior art that dynamic submarine cables are prone to the growth of marine life attachments, which are difficult to clean, and provide a submarine cable protection apparatus and a laying method thereof and a laying device.

To resolve the foregoing problem, the present invention provides a submarine cable protection apparatus, including: a flexible protection sleeve; a strapping fixing structure, disposed at a first end of the flexible protection sleeve; a first connector structure, disposed at a second end of the flexible protection sleeve, the first connector structure being configured to be connected to the laying device; and an accommodating bag, disposed on an inner side of the flexible protection sleeve and located at the second end of the flexible protection sleeve, a coagulator being disposed in the accommodating bag.

Optionally, a pull string is disposed on the accommodating bag, and the pull string is configured to release the coagulator.

Optionally, an accommodating hole is provided in the first connector structure, and the pull string passes through the accommodating hole to be configured to be connected to the laying device.

Optionally, the strapping fixing structure is a strap.

The present invention further provides a laying device, configured to lay the foregoing submarine cable protection apparatus. The laying device includes: a housing; a second connector structure, disposed at a top of the housing, and configured to be detachably connected to the first connector structure; a drive mechanism, disposed in the housing; and walking wheels, the drive mechanism being configured to drive the walking wheels to rotate, each walking wheel being configured to fit on an outer wall of a submarine cable.

Optionally, the second connector structure is a magnetic member, and a coil is wound around the second connector structure.

Optionally, the drive mechanism is a motor, and the motor is configured to drive the walking wheels to rotate through a gear transmission mechanism.

Optionally, the laying device further includes a friction wheel, and the friction wheel is configured to fit on the outer wall of the submarine cable.

Optionally, a hoisting ring is disposed on the housing.

The present invention further provides a laying method of a submarine cable protection apparatus. The foregoing submarine cable protection apparatus is laid by using the foregoing laying method. The laying method includes: step S 1: sleeving the flexible protection sleeve over a submarine cable; step S2: connecting the second connector structure to the first connector structure; step S3: driving, by the drive mechanism, the walking wheels to rotate, so as to enable the laying device to travel downward along the submarine cable and enable the flexible protection sleeve to unfold; and step S4: after the laying device moves to a predetermined position, separating the first connector structure from the second connector structure, releasing the coagulator in the accommodating bag, and strapping and fixing the strapping fixing structure.

The present invention has the following advantages:

Through the technical solution of the present invention, during the installation of the submarine cable protection apparatus, the flexible protection sleeve covers a dynamic submarine cable. The first connector structure is then connected to the laying device. The laying device moves downward along the dynamic submarine cable to enable the flexible protection sleeve to unfold. After the flexible protection sleeve has unfolded, the strapping fixing structure at the first end of the flexible protection sleeve is strapped and fixed, and the coagulator in the accommodating bag is released to fill a gap between the dynamic submarine cable and the flexible protection sleeve. After the foregoing submarine cable protection apparatus has been installed, the flexible protection sleeve may cover the dynamic submarine cable for protection. When a large number of marine life attachments exist outside the flexible protection sleeve after use for a period of time, it is only necessary to loose the strapping fixing structure to allow the flexible protection sleeve to fall off and replace a new flexible protection sleeve. Therefore, the technical solution of the present invention resolves the deficiency in the prior art that dynamic submarine cables are prone to the growth of marine life attachments, which are difficult to clean.

### BRIEF DESCRIPTION OF THE DRAWING

To describe the technical solutions in specific embodiments of the present invention or the prior art more clearly, the following briefly introduces the accompanying drawings required for describing the specific embodiments or the prior art. Apparently, the accompanying drawings in the following description show some embodiments of the present invention, and a person of ordinary skill in the art may still derive other drawings from these accompanying drawings without creative efforts.
FIG. 1 is a schematic structural diagram of a submarine cable protection apparatus according to the present invention;
FIG. 2 is a schematic cross-sectional view of the submarine cable protection apparatus in FIG. 1;
FIG. 3 is a schematic structural diagram of a laying device according to the present invention;
FIG. 4 is an enlarged schematic diagram of A in FIG. 3;
FIG. 5 is a schematic top view of the laying device in FIG. 3;
FIG. 6 is an enlarged schematic diagram of B in FIG. 5;
FIG. 7 is a schematic diagram of coordination between a submarine cable protection apparatus and a laying device according to the present invention;
FIG. 8 is a schematic structural diagram after the laying device in FIG. 7 moves in position; and
FIG. 9 is a schematic structural diagram after the submarine cable protection apparatus in FIG. 7 has been installed.

### Reference numerals:

10. flexible protection sleeve; 20. strapping fixing structure; 30. first connector structure; 31. accommodating hole; 40. accommodating bag; 41. pull string; 100. housing; 200. second connector structure; 300. drive mechanism; 400. walking wheels; 500. coil; 600. gear transmission mechanism; 700. friction wheel; 800. hoisting ring; 900. bus; 1000. laying device; 2000. submarine cable; and 3000. submarine cable protection apparatus.

### DETAILED DESCRIPTION

The following clearly and completely describes the technical solutions of the present invention with reference to the accompanying drawings. Apparently, the described embodiments are merely some rather than all of the embodiments of the present invention. All other embodiments obtained by a person of ordinary skill in the art based on the embodiments of the present invention without creative efforts shall fall within the protection scope of the present invention.

In the description of the present invention, it needs to be understood that orientation or location relationships indicated by terms "center", "up", "down", "left", "right", "vertical", "horizontal", "inside", and "outside" are based on orientation or location relationships shown in the accompanying drawings, and are only used to facilitate description of the present invention and simplify description, but are not used to indicate or imply that the apparatuses or elements must have specific orientations or are constructed and operated by using specific orientations, and therefore, cannot be understood as a limit to the present invention. In addition, the terms "first", "second", and "third" are used only for description, but are not intended to indicate or imply relative importance.

In the description of the present invention, it needs to be noted that unless otherwise expressly specified and defined, "mounted", "connected", and "connection", should be understood in a broad sense, for example, fixedly connected, detachably connected or integrally connected; or mechanically connected or electrically connected; or connected directly or indirectly through an intermediate, or two elements communicated internally. For a person of ordinary skill in the art, specific meanings of the terms in the present invention should be understood according to specific cases.

In addition, the technical features involved in different embodiments of the present invention described below can be combined with each other as long as they do not constitute a conflict between them.

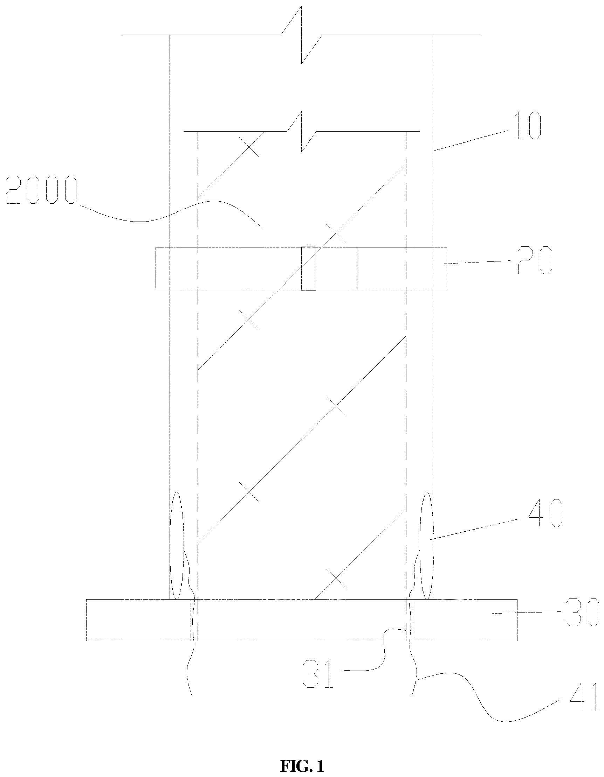

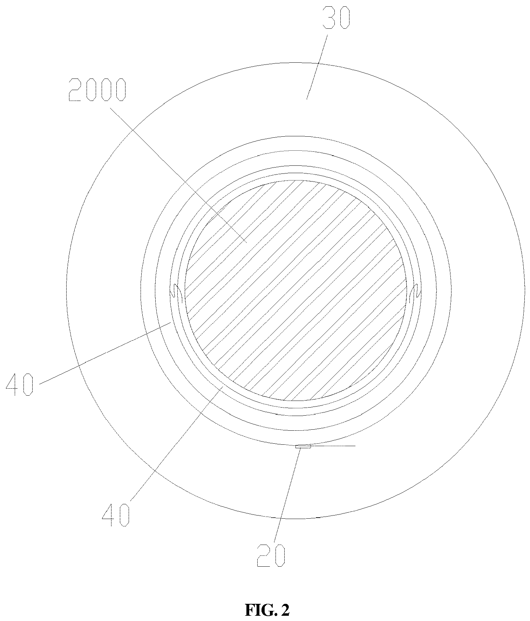

As shown in FIG. 1 and FIG. 2, a submarine cable protection apparatus in this embodiment includes a flexible protection sleeve 10, a strapping fixing structure 20, a first connector structure 30, and an accommodating bag 40. The strapping fixing structure 20 is disposed at a first end of the flexible protection sleeve 10. The first connector structure 30 is disposed at a second end of the flexible protection sleeve 10. The first connector structure 30 is configured to be connected to the laying device 1000. The accommodating bag 40 is disposed on an inner side of the flexible protection sleeve 10 and located at the second end of the flexible protection sleeve 10. A coagulator is disposed in the accommodating bag 40.

Through the technical solution in this embodiment, during the installation of the submarine cable protection apparatus, the flexible protection sleeve 10 covers a dynamic submarine cable. The first connector structure 30 is then connected to the laying device 1000. The laying device 1000 moves downward along the dynamic submarine cable to enable the flexible protection sleeve to unfold. After the flexible protection sleeve 10 has unfolded, the strapping fixing structure 20 at the first end of the flexible protection sleeve 10 is strapped and fixed, and the coagulator in the accommodating bag 40 is released to fill a gap between the dynamic submarine cable and the flexible protection sleeve 10. After the foregoing submarine cable protection apparatus has been installed, the flexible protection sleeve 10 may cover the dynamic submarine cable for protection. When a large number of marine life attachments exist outside the flexible protection sleeve 10 after use for a period of time, it is only necessary to loose the strapping fixing structure 20 to allow the flexible protection sleeve 10 to fall off and replace a new flexible protection sleeve 10. Therefore, the technical solution of the present invention resolves the deficiency in the prior art that dynamic submarine cables are prone to the growth of marine life attachments, which are difficult to clean.

In the foregoing structure, the flexible protection sleeve 10 is laid by using the laying device 1000. A flexible sealed protection layer is decorated around a submarine cable 2000 to isolate the submarine cable 2000 from marine life to prevent attachment, thereby protecting dynamic submarine cables.

It needs to be noted that the foregoing "laying device" is a device that can walk up and down along the submarine cable 2000. For example, the laying device 1000 may be a wheel walking robot. A lower end of the flexible protection sleeve 10 is connected to the laying device 1000 by the first connector structure 30. When walking downward along the submarine cable 2000, the laying device 1000 may drive the flexible protection sleeve 10 to move downward to cover the submarine cable 2000.

Further, the flexible protection sleeve 10 is made of a flexible waterproof material. Preferably, the material may be anti-corrosive and can be corroded and degraded after a long time, so that the flexible protection sleeve is not pollutive. The flexible protection sleeve 10 is used for regularly protect the submarine cable 2000. There is a certain gap between the laid flexible protection sleeve 10 and the submarine cable 2000. The strapping fixing structure 20 and the first connector structure 30 are respectively disposed at an upper end and the lower end of the flexible protection sleeve 10.

Further, the strapping fixing structure 20 is preferably a strap. The strap is made of plastic or another anti-corrosive material and has a relatively small thickness to facilitate regular detachment, to regularly replace the flexible protection sleeve 10. The strap is provided with a buckle. The buckle keeps the strap from loosening after the strap is tightened, to fix and seal the upper end of the flexible protection sleeve 10.

Further, the foregoing first connector structure 30 has a flange form, is made of metal (iron), and is used for a butt connection to the laying device 1000. There is a certain gap between the first connector structure 30 and the submarine cable 2000. The accommodating bag 40 is disposed on an inner side of a connection between an upper portion of the first connector structure 30 and the flexible protection sleeve 10. The accommodating bag 40 may be a plastic film. The coagulator is loaded in the plastic film, and the coagulator is isolated from seawater. The plastic film is bonded to the first connector structure 30 and the flexible protection sleeve 10. A pull string 41 is disposed on a side of the plastic film close to the submarine cable 2000. An end portion of the pull string 41 is connected to the plastic film outside the coagulator. The plastic film may be broken when the pull string 41 is pulled, to mix the coagulator and seawater. The coagulator enters the gap between the first connector structure 30 and the submarine cable 2000 to coagulate and seal and fix the gap between the first connector structure 30 and the submarine cable 2000, so as to seal and fix the lower end of the flexible protection sleeve 10.

As shown in FIG. 1, optionally, an accommodating hole 31 is provided in the first connector structure 30. The pull string 41 passes through the accommodating hole 31 to be configured to be connected to the laying device 1000.

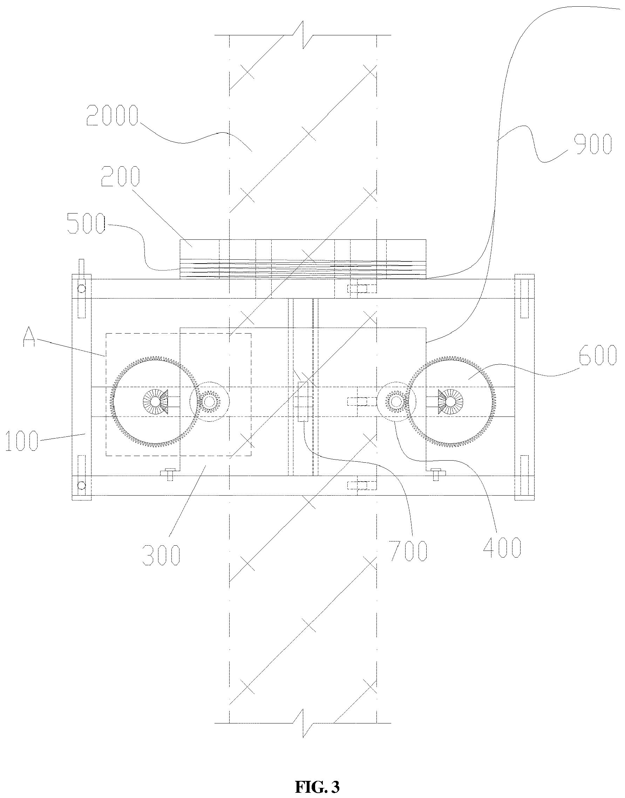

As shown in FIG. 3 to FIG. 6, this embodiment further provides a laying device. The laying device is configured to lay the foregoing submarine cable protection apparatus. The laying device includes a housing 100, a second connector structure 200, a drive mechanism 300, and walking wheels 400. The second connector structure 200 is disposed at a top of the housing 100, and is configured to be detachably connected to the first connector structure 30. The drive mechanism 300 is disposed in the housing 100. The drive mechanism 300 is configured to drive the walking wheels 400 to rotate. Each walking wheel 400 is configured to fit on an outer wall of a submarine cable 2000.

When the flexible protection sleeve 10 needs to be laid, the second connector structure 200 is connected to the first connector structure 30 of the flexible protection sleeve 10. Then the drive mechanism drives the walking wheels 400 to rotate, so as to enable the laying device to move downward along the submarine cable 2000. In a process of moving downward, the laying device may enable the flexible protection sleeve 10 to unfold. After the laying is completed, the laying device pulls the pull string 41 and releases the coagulator in the accommodating bag 40. After the sealing is completed, the first connector structure 30 is separated from the second connector structure 200, to separate the laying device 1000 from the flexible protection sleeve 10.

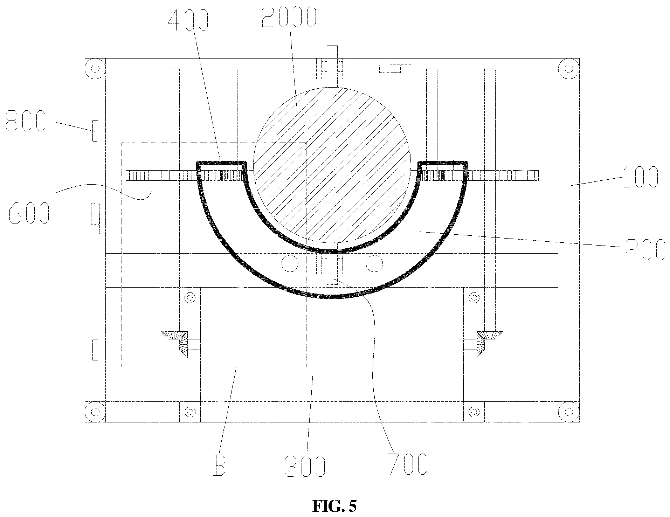

With reference to FIG. 3 and FIG. 5, in this embodiment, the housing 100 is of a frame structure. The housing 100 is formed by joining cross rods and vertical rods. The second connector structure 200 is of a semi-annular structure, so that the submarine cable 2000 can be clamped in the second connector structure 200 from a side portion, so as to facilitate a connection between the second connector structure 200 and the first connector structure 30. The cross rods and vertical rods may be connected by bolts. In addition, the housing 100 may be divided into two or more parts in a horizontal direction or a vertical direction. Adjacent parts are locked by a solenoid valve to facilitate detachment.

Preferably, there is a certain gap between the second connector structure 200 and the housing. In this embodiment, the second connector structure 200 is fixed on the housing by two fixing pins. The fixing pins are made of acrylic, high-strength plastic, or another non-metal material.

Preferably, in the technical solution in this embodiment, the second connector structure 200 is a magnetic member, and a coil 500 is wound around the second connector structure 200. Specifically, when the coil 500 is energized, the second connector structure 200 is magnetic, so that the second connector structure 200 may be connected to the first connector structure 30. When the coil 500 is deenergized, the second connector structure 200 is demagnetized, so that the first connector structure 30 and the second connector structure 200 may be separated. The foregoing structure facilitates the installation and separation operations of the first connector structure 30 and the second connector structure 200.

Certainly, in some implementations not shown, the first connector structure 30 and the second connector structure 200 may be connected in another manner, for example, are detachably connected by a fastening member or a buckle or in another manner.

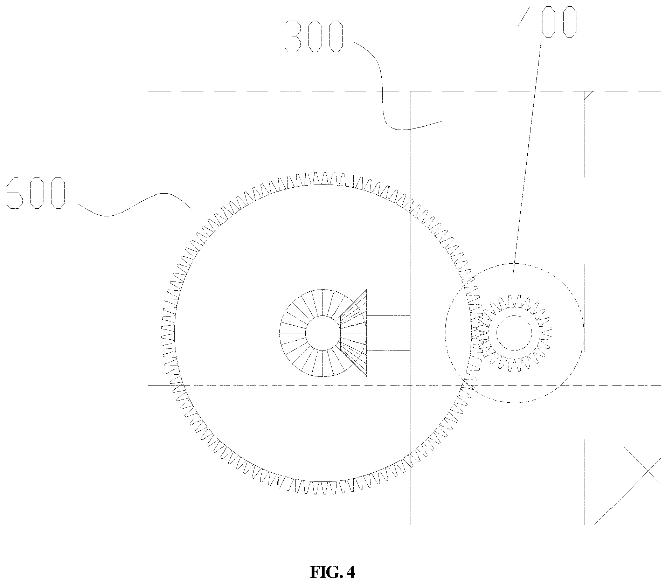

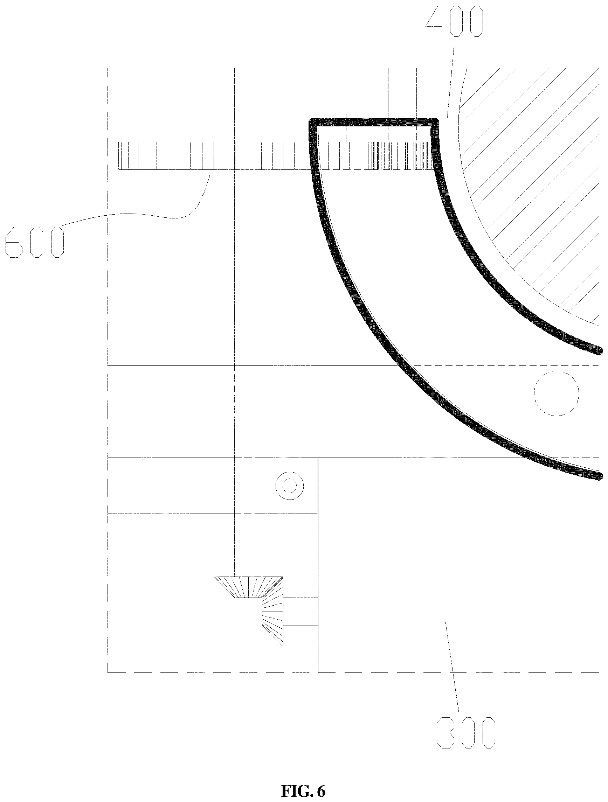

As shown in FIG. 3 to FIG. 6, in the technical solution in this embodiment, the drive mechanism 300 is a motor, and the motor is configured to drive the walking wheels 400 to rotate through a gear transmission mechanism 600. Specifically, the motor is installed inside the housing 100 by a fastening member. Further, as can be seen with reference to FIG. 4 and FIG. 6, the gear transmission mechanism includes an input gear, an intermediate transmission gear, and an output gear. Specifically, the input gear is connected to a motor shaft of the motor. The intermediate transmission gear includes a bull gear and a pinion disposed coaxially. The pinion is engaged with the input gear. Further preferably, both the pinion and the input gear have helical teeth, to implement a change in a transmission direction. The bull gear and the pinion rotate synchronously, to implement speed reduction. The output gear is coaxially connected to the walking wheels, and the output gear is engaged with the bull gear. Through the foregoing gear transmission mechanism 600, the torque of the motor can be transferred to the walking wheels 400. The walking wheels 400 is in a friction fit with an outer wall of the submarine cable 2000, to implement the overall elevation or lowering of the laying device 1000 along the submarine cable 2000.

Preferably, as can be seen with reference to FIG. 3 and FIG. 5, two walking wheels 400 are disposed in this embodiment. The two walking wheels 400 are disposed opposite each other, and are clamped on two opposite sides of the submarine cable 2000. The arrangement of the two walking wheels 400 makes the elevation or lowering of the laying device 1000 more stable.

Preferably, in this embodiment, the motor is a dual-shaft motor. Two ends of the motor shaft are respectively connected to the two walking wheels 400 by the gear transmission mechanism 600.

Certainly, in some implementations not shown, two drive mechanisms 300 may be disposed inside the housing 100. The two drive mechanisms 300 respectively drive the two walking wheels 400.

As shown in FIG. 3 and FIG. 5, in the technical solution in this embodiment, the laying device further includes a friction wheel 700. The friction wheel 700 is configured to fit on the outer wall of the submarine cable 2000. Specifically, the friction wheel 700 is circumferentially disposed between the two walking wheels 400. The friction wheel 700 mainly provides support and stability.

As shown in FIG. 3 and FIG. 5, in the technical solution in this embodiment, a hoisting ring 800 is disposed on the housing 100. The hoisting ring is an anti-corrosive circular ring with a certain strength, and is used for hanging a hook of a hoisting rope for hoisting the laying device.

Further, the laying device is further externally connected to a bus 900. The bus 900 includes a power supply cable, a control cable, and the like. The bus 900 is connected to power or electric control equipment such as the motor, the coil 500, and the solenoid valve.

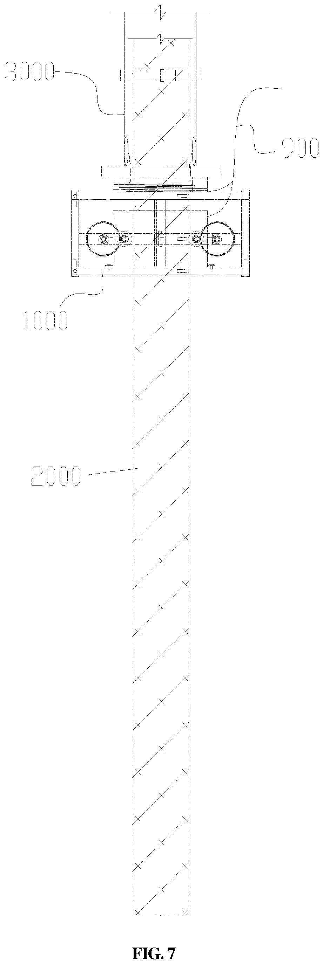

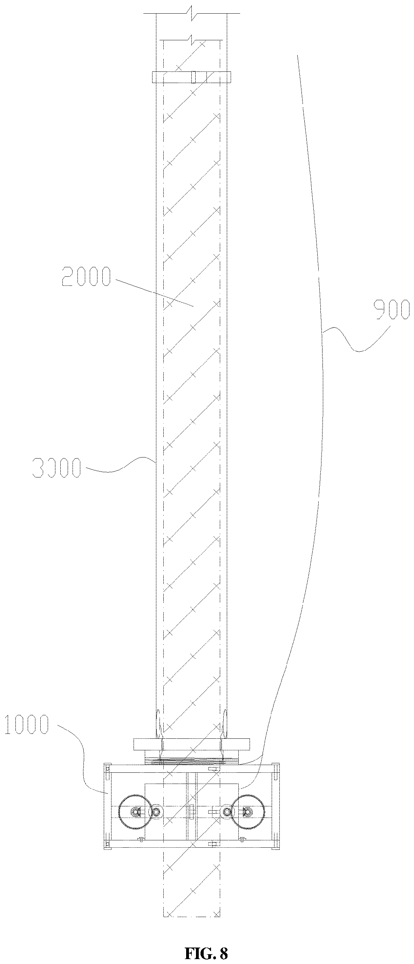

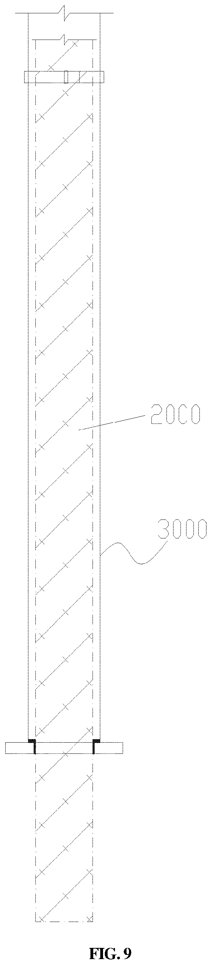

This embodiment further provides a laying method of a submarine cable protection apparatus. In the laying method, the foregoing submarine cable protection apparatus 3000 is laid by using the foregoing laying device 1000. Specifically, as shown in FIG. 7 to FIG. 9, the laying method includes the following steps.

Step S1: Sleeve the flexible protection sleeve 10 over a submarine cable 2000.

Step S2: Connect the second connector structure 200 to the first connector structure 30.

Step S3: Drive, by the drive mechanism 300, the walking wheels 400 to rotate, so as to enable the laying device 1000 to travel downward along the submarine cable and enable the flexible protection sleeve 10 to unfold.

Step S4: After the laying device 1000 moves to a predetermined position, separate the first connector structure 30 from the second connector structure 200, release the coagulator in the accommodating bag 40, and strap and fix the strapping fixing structure 20.

In the present invention, the flexible protection sleeve is laid outside a dynamic submarine cable, so that the attachment and growth of marine life on the surface of the submarine cable can be effectively prevented. The flexible protection sleeve can be replaced regularly to implement cleaning, so that the operations are simple, the applicability is high, and the pollution problem of attachment and growth of marine life on dynamic submarine cables in floating wind power can be effectively resolved, thereby providing guarantee for the safe operation of dynamic submarine cables.

In addition, the laying device in the present invention has a small size and a light weight, and can be directly run on dynamic submarine cables requiring protection without additional construction, providing economic efficiency and feasibility. The present invention can implement the laying of a flexible protection sleeve outside a dynamic submarine cable with both an upper end and a lower end sealed, so as to isolate the dynamic submarine cable from marine life, so that the attachment and growth of marine life on the submarine cable can be effectively prevented. Compared with a regular cleaning method after the growth of attachments, protection layers are changed regularly in the present invention, so that submarine cables are protected more comprehensively, thereby providing higher efficiency and applicability to dynamic submarine cables.

Obviously, the foregoing embodiments are merely examples for clear description, rather than a limitation to implementations. For a person of ordinary skill in the art, other changes or variations in different forms may also be made based on the foregoing description. All implementations cannot and do not need to be exhaustively listed herein. Obvious changes or variations that are derived there from still fall within the protection scope of the invention of the present invention.

## Claims

1. A laying device, configured to lay a submarine cable protection apparatus, the submarine cable protection apparatus comprising:
a flexible protection sleeve (10);
a strapping fixing structure (20), disposed at a first end of the flexible protection sleeve (10);
a first connector structure (30), disposed at a second end of the flexible protection sleeve (10), the first connector structure (30) being configured to be connected to the laying device (1000); and
an accommodating bag (40), disposed on an inner side of the flexible protection sleeve (10) and located at the second end of the flexible protection sleeve (10), a coagulator being disposed in the accommodating bag (40);
the laying device comprising:
a housing (100);
a second connector structure (200), disposed at a top of the housing (100), and configured to be detachably connected to the first connector structure (30);
a drive mechanism (300), disposed in the housing (100); and
walking wheels (400), the drive mechanism (300) being configured to drive the walking wheels (400) to rotate, each walking wheel (400) being configured to fit on an outer wall of a submarine cable (2000).

2. The laying device according to claim 1, wherein a pull string (41) is disposed on the accommodating bag (40), and the pull string (41) is configured to release the coagulator.

3. The laying device according to claim 2, wherein an accommodating hole (31) is provided in the first connector structure (30), and the pull string (41) passes through the accommodating hole (31) to be configured to be connected to the laying device (1000).

4. The laying device according to claim 1, wherein the strapping fixing structure (20) is a strap.

5. The laying device according to claim 1, wherein the second connector structure (200) is a magnetic member, and a coil (500) is wound around the second connector structure (200).

6. The laying device according to claim 1, wherein the drive mechanism (300) is a motor, and the motor is configured to drive the walking wheels (400) to rotate through a gear transmission mechanism (600).

7. The laying device according to claim 1, wherein the laying device further comprises a friction wheel (700), and the friction wheel (700) is configured to fit on the outer wall of the submarine cable (2000).

8. The laying device according to claim 1, wherein a hoisting ring (800) is disposed on the housing (100).

9. A laying method of a submarine cable protection apparatus, performed by using the laying device (1000) according to any one of claims 1 to 8, wherein the laying method comprises:
step S1: sleeving the flexible protection sleeve (10) over a submarine cable (2000);
step S2: connecting the second connector structure (200) to the first connector structure (30);
step S3: driving, by the drive mechanism (300), the walking wheels (400) to rotate, so as to enable the laying device (1000) to travel downward along the submarine cable and enable the flexible protection sleeve (10) to unfold; and
step S4: after the laying device (1000) moves to a predetermined position, separating the first connector structure (30) from the second connector structure (200), releasing the coagulator in the accommodating bag (40), and strapping and fixing the strapping fixing structure (20).
